(19) **Europäisches Patentamt**

**European Patent Office**

**Office européen des brevets**

(11) **EP 0 880 648 B1**

(12) **EUROPÄISCHE PATENTSCHRIFT**

(45) Veröffentlichungstag und Bekanntmachung des Hinweises auf die Patenterteilung:
**05.09.2001  Patentblatt 2001/36**

(51) Int Cl.$^7$: **F02P 5/152**

(21) Anmeldenummer: **97904420.3**

(86) Internationale Anmeldenummer:
**PCT/EP97/00633**

(22) Anmeldetag: **12.02.1997**

(87) Internationale Veröffentlichungsnummer:
**WO 97/30286 (21.08.1997 Gazette 1997/36)**

(54) **VERFAHREN ZUR BESTIMMUNG DES ZÜNDWINKELS FÜR EINE BRENNKRAFTMASCHINE MIT ADAPTIVER KLOPFREGELUNG**

METHOD OF DETERMINING THE FIRING TIME FOR AN INTERNAL-COMBUSTION ENGINE WITH ADAPTIVE KNOCK CONTROL

PROCEDE DE DETERMINATION DE LA PERIODE D'ALLUMAGE POUR UN MOTEUR A COMBUSTION INTERNE AVEC REGULATION ADAPTATIVE DU CLIQUETIS

(84) Benannte Vertragsstaaten:
**DE ES FR GB IT**

(30) Priorität: **14.02.1996  DE 19605407**

(43) Veröffentlichungstag der Anmeldung:
**02.12.1998  Patentblatt 1998/49**

(73) Patentinhaber:
- **DaimlerChrysler AG
  70567 Stuttgart (DE)**
- **ROBERT BOSCH GmbH
  70469 Stuttgart (DE)**

(72) Erfinder:
- **LAUTENSCHÜTZ, Peter
  D-73207 Plochingen (DE)**
- **SCHENK, Jürgen
  D-73095 Albershausen (DE)**
- **VOLKMANN, Hans-Joachim
  D-70619 Stuttgart (DE)**
- **HARTMANN, Stephan
  D-71701 Schwieberdingen (DE)**

(56) Entgegenhaltungen:
**EP-A- 0 302 735**      **EP-A- 0 311 097**
**GB-A- 2 232 719**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Bestimmung des Zündwinkels für eine Brennkraftmaschine mit adaptiver Klopfregelung gemäß dem Oberbegriff des Patentanspruchs 1.

Aus der DE 40 08 170 A1 ist beispielsweise eine solche adaptive Klopfregelung einer Brennkraftmaschine bekannt, wobei der aus einem Kennfeld ausgelesene Zündwinkel beim Auftreten eines Klopfereignisses um einen vorgegebenen Betrag in Richtung spät verstellt und anschließend um einen reduzierten Betrag bis zu einem erneuten Auftreten eines Klopfereignisses wieder in Richtung früh zurückgeführt wird. Beim Verlassen eines vorgegebenen Betriebsbereiches wird der aktuelle Zündwinkel in einem adaptiven Kennfeld zur Wiederverwendung beim nächsten Erreichen des Betriebsbereiches abgelegt. Aus der DE 40 01 476 A1 ist es bekannt, anstelle des aktuellen Zündwinkels den Mittelwert der Regelhübe in dem Betriebsbereich in dem adaptiven Kennfeld abzulegen.

Die Klopfneigung einer Brennkraftmaschine nimmt mit steigender Drehzahl und mit abnehmender Kraftstoffqualität, des sogenannten ROZ-Wertes, zu. Die Drehzahlabhängigkeit wird beispielsweise gemäß DE 42 05 889 A1 durch einen drehzahlabhängigen Bewertungsfaktor für den Regelhub der Klopfregelung berücksichtigt. Zur Berücksichtigung des ROZ-Wertes des verwendeten Kraftstoffes ist es außerdem bekannt, unterschiedliche Kennfelder für den Sollzündwinkel zu verwenden. Die Umschaltung zwischen diesen Kennfeldern erfolgt über einen mechanischen oder elektronischen Schalter, der beim Betanken des Fahrzeugs mit Kraftstoff einer abweichenden Qualität vom Benutzer des Fahrzeugs manuell betätigt werden muß.

Wird dieser Umschaltvorgang vergessen oder aus anderen Gründen unterlassen, so hat dies einen Betrieb der Brennkraftmaschine mit einer erhöhten Zahl von Klopfereignissen zur Folge. Außerdem wird bei diesen Verfahren der Einfluß des Umgebungsluftdruckes auf das Auftreten von Klopfereignissen nicht berücksichtigt.

Es ist die Aufgabe der Erfindung, ein Verfahren zur adaptiven Klopfregelung für Brennkraftmaschinen derart weiterzubilden, daß der Einfluß von Umgebungsbedingungen und von der verwendeten Kraftstoffqualität automatisch berücksichtigt wird.

Die Aufgabe wird erfindungsgemäß durch die kennzeichnenden Merkmale des Patentanspruchs 1 gelöst.

Durch das erfindungsgemäße Verfahren ist es auf einfache Art und Weise möglich, den Einfluß der Kraftstoffqualität und von Umgebungseinflüssen auf die Klopfregelung einer Brennkraftmaschine zu berücksichtigen. Zum einen können anhand eines Startwertes die zu erwartende Kraftstoffqualität und Umgebungsbedingungen vorgegeben werden. Zum anderen werden aber Abweichungen hiervon durch die Ermittlung einer erlernten ROZ-Stufe aus den mittleren Spätverstellungswinkeln berücksichtigt.

Durch die Vorgabe eines Korrekturzündwinkels auf der Basis der aktuellen ROZ-Stufe kann die Klopfregelung entlastet werden. Gleichzeitig wird durch die Vorgabe des maximalen Regelhubes in Abhängigkeit von der erlernten ROZ-Stufe verhindert, daß die Summe aus Korrekturzündwinkel und der eigentlichen Zündwinkelverstellung der Klopfregelung den zulässigen Bereich nicht überschreitet.

Weitere Vorteile der Erfindung gehen aus den Unteransprüchen und der Beschreibung hervor.

Im folgenden wird das erfindungsgemäße Verfahren anhand einer Zeichnung näher beschrieben, wobei

Fig. 1    ein Blockschaltbild des erfindungsgemäßen Verfahrens,

Fig. 2    ein Kennfeld mit Schwellwerten für die Umschaltung der erlernten ROZ-Stufe in Abhängigkeit von der gültigen ROZ-Stufe,

Fig. 3    eine Bewertungsmaske für diejenigen Betriebszustände, die bei der Ermittlung der erlernten ROZ-Stufe berücksichtigt werden,

Fig. 4    ein Kennfeld für den maximalen Regelhub der Klopfregelung in Abhängigkeit von der erlernten ROZ-Stufe und der Motordrehzahl,

Fig. 5    ein Kennfeld für die Basisspätverstellung in Abhängigkeit von der Motorlast und der gültigen ROZ-Stufe und

Fig. 6    ein Kennfeld für einen Bewertungsfaktor zur Ermittlung eines Korrekturzündwinkels in Abhängigkeit von der Motordrehzahl zeigt.

Adaptive Klopfregelungen sind aus dem Stand der Technik bekannt und werden daher an dieser Stelle nur noch kurz beschrieben. Brennkraftmaschinen werden bevorzugt mit einem möglichst frühen Zündzeitpunkt betrieben. Hierbei kann es jedoch unter bestimmten Betriebsbedingungen zu einer klopfenden Verbrennung kommen. Mit Hilfe einer Klopfregelung wird nun versucht, solche unerwünschten Klopfereignisse möglichst zu vermeiden. Hierzu wird der von der Motorsteuerung ermittelte Zündwinkel beim Auftreten eines Klopfereignisses um einen vorgegebenen Betrag in Richtung spät verstellt, wobei ein maximaler Regelhub für die Spätverstellung vorgegeben wird. Anschließend wird der Zündwinkel dann stufenweise bis zum erneuten Auftreten eines Klopfereignisses in Richtung früh zurückgeführt.

Bei adaptiven Klopfregelungen werden Betriebsparameter der Brennkraftmaschine, vorzugsweise Last und Drehzahl, in vorgegebene Intervalle unterteilt und somit eine vorgegebene Zahl von Betriebszuständen definiert. Beim Wechsel von einem solchen Betriebszustand in einen anderen wird dann die aktuelle Spätverstellung in einem Kennfeld abgelegt und beim erneuten Erreichen dieses Betriebszustandes wieder ausgelesen und als Startwert verwendet. Erfolgt die Klopfregelung zylinderselektiv, so wird für jeden Zylinder ein solches Kennfeld abgelegt.

Die Klopfneigung der Brennkraftmaschine hängt neben anderen Betriebsparametern auch von der Qualität des verwendeten Kraftstoffs und von Umgebungsbedingungen, beispielsweise dem Umgebungsluftdruck, ab. Die Kraftstoffqualität wird hierbei im allgemeinen in Form eines sogenannten ROZ-Wertes, der den mittleren Oktangehalt im Kraftstoff angibt, beschrieben.

Bei der adaptiven Klopfregelung wird die aktuelle Spätverstellung jeweils für die momentane Kraftstoffqualität und die aktuellen Umgebungsbedingungen abgelegt. Ändert sich jedoch die Kraftstoffqualität oder die Umgebungsgebidnungen vor dem erneuten Erreichen eines Betriebszustandes, so stimmt die abgelegte Spätverstellung mit dem aktuellen Betriebszustand der Brennkraftmaschine nicht mehr überein. Wird beispielsweise zwischenzeitlich Kraftstoff mit einem geringeren ROZ-Wert getankt, so nimmt die Klopfneigung der Brennkraftmaschine zu. Beim erstmaligen Erreichen eines Betriebszustandes wird dies aber durch die abgelegte Spätverstellung noch nicht berücksichtigt. Die Folge ist, daß in jedem Betriebszustand bis zum Erreichen einer geeigneten Spätverstellung jeweils eine Vielzahl von Klopfereignissen auftreten.

Der Erfindung liegt nun die Erkenntnis zugrunde, daß sich die einzustellende Spätverstellung in Abhängigkeit von der Kraftstoffqualität und den Umgebungsbedingungen in allen Betriebszuständen gleichermaßen ändert. Bei Verwendung eines Kraftstoffes mit schlechterer Qualität werden sich die im Kennfeld abgelegten Spätverstellwinkel durch die adaptive Klopfregelung für alle erreichten Betriebszustände vergrößern.

Aus den abgelegten Werten für die Spätverstellung kann somit eine erlernte, mit $ROZ_{ums}$ bezeichnete ROZ-Stufe, die gleichzeitig die Einflüsse der Kraftstoffqualität und der Umgebungsbedingungen beschreibt, ermittelt werden. Die gültige ROZ-Stufe wird dann verwendet, um einen die genannten Einflußgrößen berücksichtigenden Korrekturzündwinkel zu ermitteln. Gleichzeitig wird die ROZ-Stufe aber auch verwendet, um eine Anpassung des maximalen Regelhubes an die Basis-Spätverstellung vorzunehmen. Mit zunehmender Basis-Spätverstellung sollte nämlich der Regelhub, der der normalen Klopfregelung zur Verfügung steht, verringert werden.

Beim Neustart der Brennkraftmaschine wird die gültige ROZ-Stufe aus einem nichtflüchtigen Speicher, beispielsweise einem sogenannten EEPROM, ausgelesen. Dieser Startwert für die ROZ-Stufe wird bei der Herstellung in Abhängigkeit von den zu erwarteten Kraftstoff- und Umgebungsbedingungen am Einsatzort des Fahrzeugs voreingestellt. Er kann später durch Fachpersonal einer Werkstatt verändert werden. Die Ermittlung der erlernten ROZ-Stufe $ROZ_{ums}$ erfolgt nach einer frei wählbaren Anzahl von Adaptionen der Klopfregelung. Dieser Zeitraum wird benötigt, damit sich die Klopfregelung an die momentane Kraftstoffqualität und die herrschenden Umgebungsbedingungen anpassen kann. Diese erlernte ROZ-Stufe $ROZ_{ums}$ wird dann mit dem Startwert $ROZ_0$ verglichen und die gültige ROZ-Stufe ROZ dann gegebenenfalls auf die höhere der beiden ROZ-Stufen $ROZ_0$, $ROZ_{ums}$ hochgesetzt. Eine höhere ROZ-Stufe kennzeichnet in diesem Zusammenhang eine erhöhte Klopfneigung der Brennkraftmaschine, beispielsweise aufgrund der Verwendung von Kraftstoff mit geringerem Oktangehalt. Nach der Umschaltung in eine höhere ROZ-Stufe erfolgt dann nach einer ebenfalls frei wählbaren Anzahl von Adaptionen der Klopfregelung eine erneute Ermittlung der erlernten ROZ-Stufe $ROZ_{ums}$ und gegebenenfalls eine erneute Erhöhung der gültigen ROZ-Stufe.

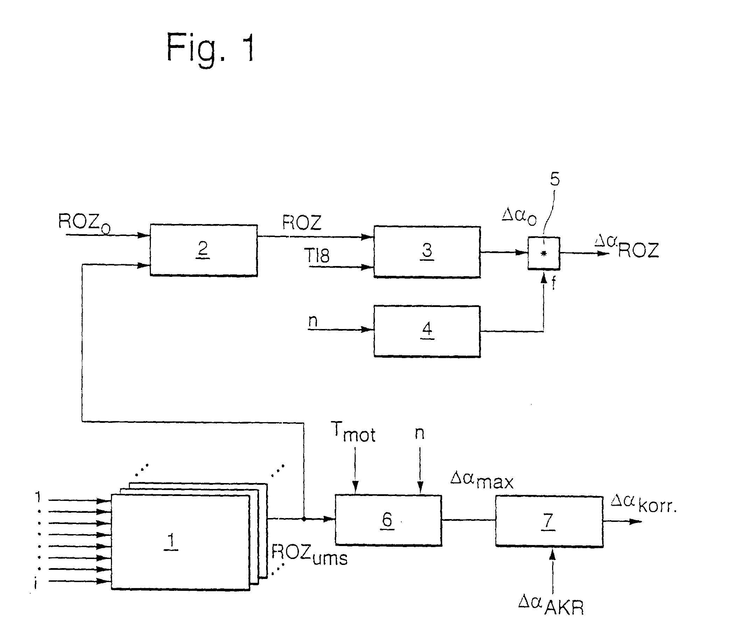

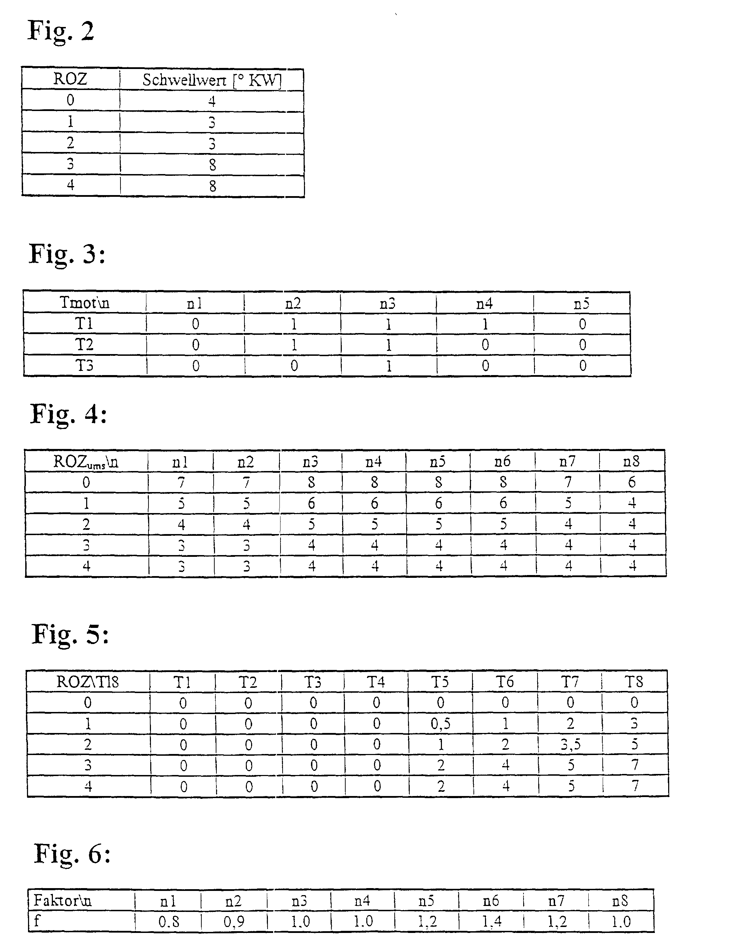

Der in Fig. 1 mit 1 gekennzeichnete Block enthält die in Abhängigkeit von Drehzahl n und Last L abgelegten Kennfelder der Klopfregelung für die i Zylinder einer Brennkraftmaschine, wobei der Drehzahlbereich beispielsweise in 5 und der Lastbereich in 3 Intervalle aufgeteilt ist, so daß insgesamt 15 Betriebszustände definiert sind. Aus den in den Kennfeldern abgelegten Daten wird dann nach einer vorgegebenen Anzahl von Adaptionen der Klopfregelung eine mit $ROZ_{ums}$ bezeichnete erlernte ROZ-Stufe, die den Einfluß der Kraftstoffqualität und der Umgebungsbedingungen beschreibt, ermittelt. Die erlernte ROZ-Stufe $ROZ_{ums}$ wird in den Blöcken 2 und 6 als Eingangsgröße verwendet. In Block 2 wird als weitere Eingangsgröße ein Startwert für die ROZ-Stufe $ROZ_0$, der in einem nichtflüchtigen Speicher abgelegt ist, eingelesen. In Block 2 werden die ROZ-Stufen $ROZ_{ums}$ und $ROZ_0$ verglichen und die größere der beiden Stufen als gültige ROZ-Stufe an Block 3 übergeben. Anhand dieser ROZ-Stufe und der aktuellen Motorlast TL8 wird in Block 3 eine Basis-Spätverstellung $\Delta\alpha_0$ ermittelt. Anstelle oder zusätzlich zur Motorlast T18 kann jedoch auch die Motortemperatur als Eingangsgröße verwendet werden. Parallel dazu wird in Block 4 in Abhängigkeit der Motordrehzahl n ein Korrekturfaktor f ermittelt und anschließend in Block 5 zur Ermittlung eines Korrekturzündwinkels $\Delta\alpha_{ROZ}$ mit der Basis-Spätverstellung $\Delta\alpha_0$ multipliziert.

In Block 6 wird aus der erlernten ROZ-Stufe $ROZ_{ums}$ in Abhängigkeit von der Motortemperatur $T_{mot}$ und/oder Motordrehzahl n ein maximaler Regelhub $\Delta\alpha_{max}$ für die Klopfregelung ermittelt. Dieser maximale Regelhub $\Delta\alpha_{max}$ wird dann laufend in Block 7 mit dem von der Klopfregelung ermittelten Regelhub $\Delta\alpha_{AKR}$ verglichen.

Ist dabei der gewünschte Regelhub $\Delta\alpha_{AKR}$ kleiner als der maximale Regelhub $\Delta\alpha_{max}$, so wird der gewünschte Regelhub $\Delta\alpha_{AKR}$ als Stellgröße $\Delta\alpha_{korr}$ an

die Zündwinkeleinstellung übergeben. Übersteigt dagegen der gewünschte Regelhub $\Delta\alpha_{AKR}$ den maximalen Regelhub $\Delta\alpha_{max}$, so wird der maximale Regelhub $\Delta\alpha_{max}$ als Stellgröße $\Delta\alpha_{korr}$ ausgegeben. Einfach ausgedrückt wird also in Block 7 der von der Klopfregelung ermittelte Regelhub $\Delta\alpha_{AKR}$ durch den maximalen Regelhub $\Delta\alpha_{max}$ begrenzt.

Für die voreingestellte ROZ-Stufe $ROZ_0$ kann, wie bereits weiter oben beschrieben, ein fester, im Betrieb nicht veränderbarer Wert vorgegeben werden. Durch Fachpersonal in einer Werkstatt kann diese voreingestellte ROZ-Stufe jedoch jederzeit an örtliche Gegebenheiten angepaßt werden. Es ist aber auch denkbar, beim Beenden des Verfahrens die mit einem Faktor < 1 gewichtete gültige ROZ-Stufe in das EEPROM zu schreiben. Der Faktor, beispielsweise mit einem Wert von 0,5, gewährleistet die Möglichkeit, von einer höheren in eine niedrigere ROZ-Stufe umzuschalten. In dem Fall, wo die im EEPROM abgelegte ROZ-Stufe $ROZ_0$ höher ist als die gelernte ROZ-Stufe $ROZ_{ums}$, würde nämlich in Block 2 bei jeder Vergleichsoperation die höhere ROZ-Stufe $ROZ_0$ aus dem EEPROM berücksichtigt. Somit würde beim nächsten Ende des Verfahrens auch die höhere ROZ-Stufe als gültige ROZ-Stufe in das EEPROM abgelegt. Eine niedrigere ROZ-Stufe könnte nicht mehr erreicht werden.

Anhand eines in Fig. 2 und 3 dargestellten Ausführungsbeispiels wird nun die Ermittlung der erlernten ROZ-Stufe $ROZ_{ums}$ näher erläutert. Aus den im Kennfeld für die Klopfregelung abgelegten Werten für die Spätverstellung wird zuerst eine mittlere Spätverstellung $\Delta\bar{\alpha}$, beispielsweise als arithmetischer Mittelwert aller Kennfeldeinträge ermittelt:

$$\Delta\bar{\alpha} = \sum_{i,j} \Delta\alpha_{i,j}(i+j)$$

Diese mittlere Spätverstellung $\Delta\bar{\alpha}$ wird dann mit einem in Abhängigkeit von der gültigen ROZ-Stufe vorgegebenen Schwellwert verglichen. Ein Ausführungsbeispiel für eine solche Wertetabelle zeigt Fig. 2, wobei insgesamt fünf ROZ-Stufen vorgesehen sind. Übersteigt nun die mittlere Spätverstellung $\Delta\bar{\alpha}$ den aktuellen Schwellwert, so wird die erlernte ROZ-Stufe $ROZ_{ums}$ um eine Stufe erhöht. Wird die Brennkraftmaschine also beispielsweise in der ROZ-Stufe 0 betrieben, so wird dann, wenn die mittlere Spätverstellung $\Delta\bar{\alpha}$ den Schwellwert 4° Kurbelwinkel übersteigt, auf die ROZ-Stufe 1 umgeschaltet. Anschließend wird in Block 2 dann diese erlernte ROZ-Stufe $ROZ_{ums}$ mit dem Startwert $ROZ_0$ verglichen und der größere der beiden ROZ-Stufen als gültige ROZ-Stufe verwendet.

Da die Erfassung von Klopfereignissen nicht in allen Betriebszuständen optimal arbeitet ist es jedoch auch möglich, für die Ermittlung der mittleren Spätverstellung $\Delta\bar{\alpha}$ nur solche Betriebszustände heranzuziehen, in denen die Klopferkennung zuverlässige Ergebnisse liefert. Hierzu werden die Kennfeldwerte, die den für die Klopfregelung weniger zuverlässigen Betriebszuständen entsprechen, über eine entsprechende Bewertungsmaske, wie sie beispielsweise in Fig. 3 dargestellt ist, ausgeblendet. Zur Ermittlung der mittleren Spätverstellung $\Delta\bar{\alpha}$ erstreckt sich die Summation in der obigen Formel dann nur über diejenigen Betriebszustände, die in der Bewertungsmaske in Fig. 3 mit einer 1 gekennzeichnet sind. Die mit einer 0 gekennzeichneten Betriebszustände werden nicht berücksichtigt.

Neben der mittleren Spätverstellung $\Delta\bar{\alpha}$ kann auch die aktuelle Klopfhäufigkeit $\Delta\alpha_{ist}$ als Umschaltkriterium für die Ermittlung der erlernten ROZ-Stufe $ROZ_{ums}$ verwendet werden. Die aktuelle Klopfhäufigkeit $\Delta\alpha_{ist}$ wird jeweils über eine vorgegebene Zeitdauer $t_1$ ermittelt. Nach Ablauf dieser Zeitdauer $t_1$ wird die aktuelle Klopfhäufigkeit $\Delta\alpha_{ist}$ dann mit einem entsprechenden Schwellwert, der betriebsparameterabhängig vorgegeben werden kann, verglichen und anschließend die Ermittlung erneut gestartet. Übersteigt die aktuelle Klopfhäufigkeit $\Delta\alpha_{ist}$ am Ende einer Zeitdauer $t_1$ den entsprechenden Schwellwert, so wird die erlernte ROZ-Stufe $ROZ_{ums}$ um eine Stufe erhöht.

Die Zeitdauer $t_1$ wird beispielsweise mit Hilfe eines Zeitzählers ermittelt, wobei der Zeitzähler nur dann läuft, wenn die Klopfregelung aktiv ist und die Betriebsparameter sich in einem maskierten Bereich befinden. Ist eine der Bedingungen nicht erfüllt, so wird der Zeitzähler gestoppt. Sind anschließend wieder alle Bedingungen erfüllt, so läuft der Zeitzähler weiter.

Die aktuelle Klopfhäufigkeit $\Delta\alpha_{ist}$ kann auf zwei verschiedene Arten ermittelt werden. Zum einen kann die Anzahl der Klopfereignisse innerhalb der Zeitdauer $t_1$ erfaßt und anschließend mit der mittleren Spätverstellung $\Delta\bar{\alpha}$ multipliziert werden. Hierbei werden nur solche Klopfereignisse gezählt, die Auftreten, solange der Zeitzähler läuft. Zum anderen ist es auch möglich, beim Auftreten eines Klopfereignisses jeweils den abgelegten Spätverstellungswinkel $\Delta\alpha_{i,j}$ aus dem Kennfeld auszulesen - falls der Zeitzähler läuft - und über die Zeitdauer $t_1$ mit Hilfe eines Integrators aufzuaddieren. Mit dem Erhöhen der erlernten ROZ-Stufe $ROZ_{ums}$ um eine Stufe oder nach Ablauf der Zeitdauer $t_1$ werden gleichzeitig der Zeitzähler und der Integrator zurückgesetzt. Somit ist ein mehrmaliges Hochschalten der erlernten ROZ-Stufe $ROZ_{ums}$ innerhalb eines Betriebszyklus möglich.

Die beiden beschriebenen Umschaltkriterien können entweder alternativ oder auch gleichzeitig verwendet werden, wobei bei der gleichzeitigen Verwendung eine Umschaltung in eine höhere Stufe nur dann erfolgt, wenn gleichzeitig beide Bedingungen erfüllt sind.

Der maximale Regelhub $\Delta\alpha_{max}$ kann ebenfalls anhand eines Kennfeldes ermittelt werden. Ein Ausführungsbeispiel für ein solches Kennfeld zeigt Fig. 4. Darin sind die maximalen Regelhübe $\Delta\alpha_{max}$ in Grad Kurbelwinkel in Abhängigkeit von der erlernten ROZ-Stufe $ROZ_{ums}$ und der aktuellen Motordrehzahl n abgelegt, wobei der Wertebereich für die Motordrehzahl in acht Intervalle n1 - n8 aufgeteilt wurde. Neben der Motordrehzahl n kann bei der Ermittlung des maximalen Regelhubes $\Delta\alpha_{max}$ auch die Motortemperatur $T_{mot}$ berücksichtigt werden. Dieser maximale Regelhub $\Delta\alpha_{max}$ wird dann an Block 7 zur Begrenzung des von der Klopfregelung ermittelten Regelhubes $\Delta\alpha_{AKR}$ übergeben.

Die Ermittlung des Korrekturzündwinkels $\Delta\alpha_{ROZ}$ kann ebenfalls über entsprechende Kennfelder, wie Sie in Fig. 5 und 6 gezeigt sind, erfolgen. Hierzu sind im Kennfeld gemäß Fig. 5 die Werte für die Basisspätverstellung $\Delta\alpha_0$ in Grad Kurbelwinkel in Abhängigkeit von der gültigen ROZ-Stufe ROZ und von der Motorlast T18 abgelegt. Für den Wertebereich der Motorlast T18 sind wiederum 8 Intervalle vorgesehen. Der Einfluß der Motordrehzahl n bei der Ermittlung des Korrekturzündwinkels $\Delta\alpha_{ROZ}$ wird durch ein weiteres Kennfeld berücksichtigt, wie es beispielhaft in Fig. 6 dargestellt ist. In diesem Kennfeld ist ein dimensionsloser Faktor f in Abhängigkeit von der Motordrehzahl abgelegt. Die Korrekturzündwinkel $\Delta\alpha_{ROZ}$ wird dann in Block 5 durch Multiplikation der Basisspätverstellung $\Delta\alpha_0$ mit diesem Faktor f ermittelt.

Durch die Verwendung dieses Korrekturzündwinkels $\Delta\alpha_{ROZ}$ kann der Regelaufwand der Klopfregelung verringert werden. Dadurch kann das Auftreten von Klopfereignissen reduziert und somit die Lebensdauer der Brennkraftmaschine und auch der Fahrkomfort erhöht werden. Außerdem kann der Einbau eines mechanischen oder elektronischen Schalters zur Einstellung der verwendeten Kraftstoffqualität entfallen. Zusätzlich zur Kraftstoffqualität wird außerdem auch der Einfluß von Umwelteinflüssen, beispielsweise des Umgebungsluftdruckes, berücksichtigt.

Die Anpassung der Brennkraftmaschine an den vorgesehenen Einsatzort des Fahrzeugs kann durch eine entsprechende Codierung der Kennfelder und des Startwertes für die ROZ-Stufe $ROZ_0$ vorgenommen werden. Beispielsweise wird bei einem Fahrzeug, daß in einem Land mit einer durchschnittlichen Kraftstoffqualität von ROZ 98 betrieben wird, die ROZ-Stufe auf einen Startwert $ROZ_0 = 0$ eingestellt. $ROZ_0 = 1$ entspräche dann beispielsweise einer durchschnittlichen Kraftstoffqualität von ROZ 95. Eine kurzzeitige Änderung der Umgebungseinflüße, beispielsweise bei Betrieb mit geringerer Kraftstoffqualität oder durch eine Gebirgsfahrt, wird durch das Verfahren automatisch berücksichtigt. Das erfindungsgemäße Verfahren kann außerdem auch unverändert für unterschiedliche Klopfneigung dann durch unterschiedliche Codierung der Kennfelder berücksichtigt wird. Die in den Fig. 2-6 gezeigte Codierung der Kennfelder stellt nur ein mögliches Ausführungsbeispiel dar. Der Schutzbereich der Erfindung soll daher nicht auf diese Ausführungsbeispiele beschränkt werden.

**Patentansprüche**

1. Verfahren zur Bestimmung des Zündwinkels für eine Brennkraftmaschine mit adaptiver Klopfregelung, wobei zur Reduzierung von klopfenden Verbrennungen laufend ein Spätverstellungswinkel ermittelt und in Abhängigkeit von Betriebsparametern in einem adaptiven Kennfeld abgelegt wird,
   **dadurch gekennzeichnet**,
   daß aus den Spätverstellungswinkeln ($\Delta\alpha_{AKR}$) mehrerer Kennfeldbereiche eine mittlere Spätverstellung ($\overline{\Delta\alpha}$) ermittelt und daraus in Abhängigkeit von Betriebsparametern sowohl ein zusätzlicher, die Kraftstoffqualität und/oder Umgebungsbedingungen berücksichtigender Korrekturzündwinkel ($\Delta\alpha_{ROZ}$) als auch ein maximaler Regelhub ($\Delta\alpha_{max}$) zur Begrenzung der Zündwinkelspätverstellung der Klopfregelung bestimmt wird.

2. Verfahren nach Anspruch 1,
   **dadurch gekennzeichnet**,
   daß die mittlere Spätverstellung ($\overline{\Delta\alpha}$) als arithemtischer Mittelwert der Spätverstellungswinkel ($\Delta\alpha_{AKR}$) ermittelt wird.

3. Verfahren nach Anspruch 1,
   **dadurch gekennzeichnet,**
   daß zusätzlich über eine vorgegebene Zeitdauer ($t_1$) eine aktuelle Klopfhäufigkeit ($\Delta\alpha_{ist}$) ermittelt wird.

4. Verfahren nach Anspruch 2 oder 3,
   **dadurch gekennzeichnet**,
   daß bei der Ermittlung der mittleren Spätverstellung ($\overline{\Delta\alpha}$) und/oder der aktuellen Klopfhäufigkeit ($\Delta\alpha_{ist}$) nur vorgegebene Betriebszustände berücksichtigt werden.

5. Verfahren nach Anspruch 3,
   **dadurch gekennzeichnet**,
   daß die aktuelle Klopfhäufigkeit ($\Delta\alpha_{ist}$) durch eine Erfassung der Anzahl der Klopfereignisse innerhalb der Zeitdauer ($t_1$) und anschließender Multiplikation mit der mittleren Spätverstellung ($\overline{\Delta\alpha}$) ermittelt wird.

6. Verfahren nach Anspruch 3,
   **dadurch gekennzeichnet,**
   daß zur Ermittlung der aktuellen Klopfhäufigkeit ($\Delta\alpha_{ist}$) beim Auftreten eines Klopfereignisses der abgelegte Spätverstellungswinkel ($\Delta\alpha_{i,j}$) jeweils aus dem Kennfeld ausgelesen und über die Zeitdauer (t1) aufaddiert wird.

7. Verfahren nach Anspruch 1,
   **dadurch gekennzeichnet,**
   daß mehrere erlernbare ROZ-Stufen ($ROZ_{ums}$) mit zugehörigen Schwellwerten vorgesehen sind, wobei von der aktuellen in die nächsthöhere erlernba-

re ROZ-Stufe (ROZ$_{ums}$) umgeschaltet wird, wenn die mittlere Spätverstellung ($\Delta\bar{\alpha}$) und/oder die aktuelle Klopfhäufigkeit ($\Delta\alpha_{ist}$) einen jeweils vorgegebenen Schwellwert übersteigt.

8.  Verfahren nach Anspruch 1,
    **dadurch gekennzeichnet,**
    daß ein maximaler Regelhub ($\Delta\alpha_{max}$) für die Klopfregelung in Abhängigkeit von der erlernten ROZ-Stufe (ROZ$_{ums}$) und von Betriebsparamtern der Brennkraftmaschine abgelegt ist.

9.  Verfahren nach Anspruch 1,
    **dadurch gekennzeichnet,**
    daß zusätzlich ein Startwert (ROZ$_0$) für den ROZ-Wert in einem nichtflüchtigen Speicher abgelegt ist, daß der größere der beiden ROZ-Werte (ROZ$_{ums}$, ROZ$_0$) als aktueller ROZ-Wert (ROZ) ermittelt und daraus anhand eines betriebsparameterabhängigen Kennfeldes der Korrekturzündwinkel ($\Delta\alpha_{ROZ}$) ermittelt wird.

10. Verfahren nach Anspruch 1,
    **dadurch gekennzeichnet,**
    daß der beim Abschalten der Brennkraftmaschine aktuelle ROZ-Wert (ROZ) mit einem Faktor < 1 gewichtet und als Startwert (ROZ$_0$) im nichtflüchtigen Speicher abgelegt wird.

**Claims**

1.  Method for determining the ignition angle for an internal combustion engine with adaptive knock regulation, in which to reduce knocking combustion a retard setting angle is determined continuously and stored in an adaptive performance matrix,
    **characterised in that**
    from the retard setting angles ($\Delta\alpha_{AKR}$) of several matrix ranges a mean retard setting ($\Delta\bar{\alpha}$) is determined, and from this, as a function of operating parameters, both an additional correction ignition angle ($\Delta\alpha_{ROZ}$) that takes account of fuel quality and/or the ambient conditions and also a maximum control stroke ($\Delta\alpha_{max}$) to restrict the ignition angle retard setting of the knock regulation are determined.

2.  Method according to Claim 1,
    **characterised in that**
    the mean retard setting ($\Delta\bar{\alpha}$) is determined as the arithmetical mean of the retard setting angles ($\Delta\alpha_{AKR}$).

3.  Method according to Claim 1,
    **characterised in that**
    in addition, an actual knock frequency ($\Delta\alpha_{ist}$) is determined over a predetermined time ($t_1$).

4.  Method according to Claim 2,
    **characterised in that**
    when determining the mean retard setting ($\Delta\bar{\alpha}$) and/or the actual knock frequency ($\Delta\alpha_{ist}$), only specified operating conditions are taken into account.

5.  Method according to Claim 3,
    **characterised in that**
    the actual knock frequency ($\Delta\alpha_{ist}$) is determined by counting the number of knocks within a time $t_1$ and then multiplying it by the mean retard setting ($\Delta\bar{\alpha}$).

6.  Method according to Claim 3,
    **characterised in that**
    to determine the actual knock frequency ($\Delta\alpha_{ist}$), when knocking occurs the respective stored retard setting angle ($\Delta\alpha_{ij}$) is read from the performance matrix and summed over the time interval ($t_1$).

7.  Method according to Claim 1,
    **characterised in that**
    several octane ratings (ROZ$_{ums}$) that can be 'learned' are provided with associated threshold values, and the system switches from the current learned octane rating (ROZ$_{ums}$) to the next one up when the mean retard setting ($\Delta\bar{\alpha}$) and/or the actual knock frequency ($\Delta\alpha_{ist}$) exceed(s) a threshold value specified in each case.

8.  Method according to Claim 1,
    **characterised in that**
    a maximum control stroke ($\Delta\alpha_{max}$) for the knock regulation is stored as a function of the learned octane rating (ROZ$_{ums}$) and the operating parameters of the combustion engine.

9.  Method according to Claim 1,
    **characterised in that**
    in addition, a starting value (ROZ$_o$) for the octane rating is stored in a non-volatile memory, the higher of the two octane values (ROZ$_{ums}$, ROZ$_o$) is determined as the actual octane rating (ROZ), and from this the correction ignition angle ($\Delta\alpha_{ROZ}$) is determined with reference to a performance matrix that depends on the operating parameters.

10. Method according to Claim 1,
    **characterised in that**
    the current octane value (ROZ) when the combustion engine is turned off, is weighted with a factor < 1 and stored as the starting value (ROZ$_o$) in the non-volatile memory.

**Revendications**

1.  Procédé de détermination de l'angle d'allumage pour un moteur à combustion interne à régulation anti-cognement adaptative, où, pour réduire les combustions donnant lieu à cognement, on détermine en continu un angle de retardement et, en fonction des paramètres de fonctionnement, on l'enregistre dans un champ de caractéristiques adaptatif,

**caractérisé en ce que**,

à partir des angles de retardement ($\Delta\alpha_{AKR}$) de plusieurs zones du champ de caractéristiques, on détermine un retardement moyen ($\Delta\bar{\alpha}$) et, à partir de cela, en fonction de paramètres de fonctionnement, on détermine tant un angle d'allumage de correction ($\Delta\alpha_{ROZ}$) supplémentaire, en prenant en compte la qualité du carburant et/ou les conditions ambiantes, qu'également une course de réglage maximale ($\Delta\alpha_{max.}$) pour limiter le retardement de l'angle d'allumage de la régulation anticognement.

2. Procédé selon la revendication 1, **caractérisé en ce que** le retardement moyen ($\Delta\bar{\alpha}$) est déterminé en tant que valeur moyenne arithmétique de l'angle de retardement ($\Delta\alpha_{AKR}$).

3. Procédé selon la revendication 1, **caractérisé en ce qu'**en plus, sur une durée ($t_1$) prédéterminée, on détermine la fréquence réelle de cognement ($\Delta\alpha_{réelle}$).

4. Procédé selon la revendication 2 ou 3, **caractérisé en ce que**, lors de la détermination du retardement moyen ($\Delta\bar{\alpha}$) et/ou de la fréquence réelle de cognement ($\Delta\alpha_{réelle}$), ne sont pris en compte que des états de fonctionnement prédéterminés.

5. Procédé selon la revendication 3, **caractérisé en ce que** la fréquence réelle de cognement ($\alpha_{réelle}$) est déterminée par une détection du nombre des occurrences de cognement, dans les limites d'une durée ($t_1$), et multiplication subséquente par le retardement moyen ($\Delta\bar{\alpha}$).

6. Procédé selon la revendication 3, **caractérisé en ce que**, pour déterminer la fréquence- réelle de cognement ($\Delta\alpha_{réelle}$) lors de la survenance d'une occurrence de cognement, l'angle de retardement ($\Delta\alpha_{ij}$) enregistré est chaque fois lu du champ de caractéristiques et additionné, sur la durée ($t_1$).

7. Procédé selon la revendication 1, **caractérisé en ce que** plusieurs niveaux ($ROZ_{ums}$), susceptibles d'avoir été appris, ayant des valeurs de seuil afférentes sont prévus, une commutation étant effectuée, du niveau ROZ ($ROZ_{ums}$) à capacité d'apprentissage actuelle pour le niveau immédiatement supérieur, lorsque le retardement moyen ($\Delta\bar{\alpha}$) et/ou la fréquence réelle de cognement ($\Delta\alpha_{réelle}$) dépasse (nt) une valeur de seuil chaque fois prédéterminée.

8. Procédé selon la revendication 1, **caractérisé en ce qu'**une course de réglage maximale ($\Delta\alpha_{max.}$) de la régulation anticognement est enregistrée en fonction du niveau ROZ ($ROZ_{ums}$) ayant été appris et des paramètres de fonctionnement du moteur à combustion interne.

9. Procédé selon la revendication 1, **caractérisé en ce que**, en plus, une valeur de démarrage ($ROZ_0$) pour la valeur ROZ est déposée dans une mémoire non volatile, en ce que la plus grande des deux valeurs ROZ ($ROZ_{UMS}$, $ROZ_0$) est déterminée en tant que valeur ROZ actuelle (ROZ) et, à partir de cela, l'angle d'allumage de correction ($\Delta\alpha_{ROZ}$) est déterminé, à l'aide d'un champ de caractéristiques dépendant des paramètres de fonctionnement.

10. Procédé selon la revendication 1, **caractérisé en ce que** la valeur ROZ (ROZ), actuelle lors de la mise hors service du moteur à combustion interne, est pondérée d'un facteur < 1 et est placée dans une mémoire non volatile, en tant que valeur de démarrage ($ROZ_0$).

# Fig. 1

$ROZ_0$ → | $\underline{2}$ | $\xrightarrow{ROZ}$ | $\underline{3}$ | $\xrightarrow{}$ | $\Delta\alpha_0$ 5 | $*$ | $\xrightarrow{}$ $\Delta\alpha_{ROZ}$

TI8

n → $\underline{4}$ → f

$T_{mot}$    n    $\Delta\alpha_{max}$    $\Delta\alpha_{korr.}$

1 ... i → $\underline{1}$ → $ROZ_{ums}$ → $\underline{6}$ → $\underline{7}$ → $\Delta\alpha_{korr.}$

$\Delta\alpha_{AKR}$

## Fig. 2

| ROZ | Schwellwert [° KW] |
|---|---|
| 0 | 4 |
| 1 | 3 |
| 2 | 3 |
| 3 | 8 |
| 4 | 8 |

## Fig. 3:

| Tmot\n | n1 | n2 | n3 | n4 | n5 |
|---|---|---|---|---|---|
| T1 | 0 | 1 | 1 | 1 | 0 |
| T2 | 0 | 1 | 1 | 0 | 0 |
| T3 | 0 | 0 | 1 | 0 | 0 |

## Fig. 4:

| $ROZ_{ums}$\n | n1 | n2 | n3 | n4 | n5 | n6 | n7 | n8 |
|---|---|---|---|---|---|---|---|---|
| 0 | 7 | 7 | 8 | 8 | 8 | 8 | 7 | 6 |
| 1 | 5 | 5 | 6 | 6 | 6 | 6 | 5 | 4 |
| 2 | 4 | 4 | 5 | 5 | 5 | 5 | 4 | 4 |
| 3 | 3 | 3 | 4 | 4 | 4 | 4 | 4 | 4 |
| 4 | 3 | 3 | 4 | 4 | 4 | 4 | 4 | 4 |

## Fig. 5:

| ROZ\T18 | T1 | T2 | T3 | T4 | T5 | T6 | T7 | T8 |
|---|---|---|---|---|---|---|---|---|
| 0 | 0 | 0 | 0 | 0 | 0 | 0 | 0 | 0 |
| 1 | 0 | 0 | 0 | 0 | 0,5 | 1 | 2 | 3 |
| 2 | 0 | 0 | 0 | 0 | 1 | 2 | 3,5 | 5 |
| 3 | 0 | 0 | 0 | 0 | 2 | 4 | 5 | 7 |
| 4 | 0 | 0 | 0 | 0 | 2 | 4 | 5 | 7 |

## Fig. 6:

| Faktor\n | n1 | n2 | n3 | n4 | n5 | n6 | n7 | n8 |
|---|---|---|---|---|---|---|---|---|
| f | 0.8 | 0,9 | 1.0 | 1.0 | 1,2 | 1,4 | 1,2 | 1.0 |